# EUROPÄISCHE PATENTSCHRIFT

(11) **EP 0 937 596 B1**
(45) Veröffentlichungstag und Bekanntmachung des Hinweises auf die Patenterteilung: **17.12.2003**
(21) Anmeldenummer: 99103079.2
(22) Anmeldetag: 17.02.1999
(51) Int. Cl.: B60H 1/34

(54) **Luftstromverteiler**
Air stream distributor
Distributeur d'un courant d'air

(30) Priorität: 20.02.1998 DE 19807290
(43) Veröffentlichungstag der Anmeldung: 25.08.1999
(73) Patentinhaber: Volkswagen Aktiengesellschaft, 38436 Wolfsburg (DE)
(72) Erfinder: Rehmke, Thomas, 29392 Wesendorf (DE); Schwentner, Klaus, 38444 Wolfsburg (DE)

(56) Entgegenhaltungen:
- EP-A- 0 703 104
- DE-A- 4 327 265
- GB-A- 1 320 695
- US-A- 3 602 127
- US-A- 3 824 910
- US-A- 5 120 272

## Beschreibung

Die Erfindung betrifft einen Luftstromverteiler, insbesondere für einen Kraftfahrzeuginnenraum, nach dem Oberbegriff des Anspruchs 1.

Luftstromverteiler dienen der Regulierung der Richtung und Ausbreitungsdichte eines vom Fahrtwind oder von einem Ventilator erzeugten und durch einen Luftströmungskanal in den Innenraum eines Kraftfahrzeugs geleiteten Luftstromes und sind an der Austrittsstelle desselben in dem Kraftfahrzeuginnenraum angeordnet.

Um den Luftstrom in vorbestimmten Grenzen in seiner Charakteristik und Ausströmungsrichtung verändern zu können, werden Lamellensysteme eingesetzt, die den Luftstrom in horizontaler und in vertikaler Ebene beeinflussen. Beispielsweise kann ein solches Lamellensystem aus hintereinander angeordneten und getrennt voneinander betätigbaren Blöcken von im wesentlichen parallel ausgerichteten Lamellen gebildet sein, von denen die Lamellen des einen Blockes um eine vertikale und die des anderen Blockes um eine horizontale Achse schwenkbar sind. Üblicherweise sind die um eine horizontale Achse schwenkbaren Lamellen am luftstromaustrittseitigen Ende, also fahrzeuginnenraumseitig, übereinander angeordnet, wobei die Lamellen einzeln und wiederum luftstromaustrittseitig schwenkbar gehaltert sind. Die Lamellenblöcke sind getrennt voneinander mit einer Bedienungshandhabe manuell betätigbar. Derartige Lösungen sind beispielsweise Gegenstand der DE 196 16 965 C1, der DE 36 10 188 C2 und der FR 27 10 879 A1.

Die fahrzeuginnenraumseitigen Lamellen können nach der DE 30 44 289 A1 aber auch an einem verdrehbaren Rundkörper angeordnet sein, der einen mit dem Luftströmungskanal verbundenen Innenraum aufweist, aus dem die Luft durch die Lamellen in den Fahrzeuginnenraum strömt. Die Lamellen sind parallel zur Drehachse des Ringkörpers, jedoch von der radialen Richtung ungleichmäßig abweichend, fest am Ringkörper (Dreheinsatz) angeordnet, wobei die Stellung der Lamellen kontinuierlich und nur wenig voneinander abweichend verändert ist, und können somit in Abhängigkeit von der Drehstellung des Ringkörpers die Richtung des Luftstromes gegenüber der Horizontalen verändern. Der Ringkörper ist mit einem seitlich neben diesem angeordneten Stellrad gekoppelt. Um die in Abhängigkeit von der gewünschten Richtung des Luftstromes erforderliche Stellung der Lamellen zu erhalten, muß das Stellrad gegebenenfalls einen großen Drehwinkelbereich durchlaufen.

Aus der EP 0 703 104 A1 ist ein Luftstromverteiler gemäß dem Oberbegriff des Anspruchs 1 bekannt. Dieser bekannte Luftstromverteiler weist ein schwenkbar gelagertes Frontblendengehäuse mit einer gitterartigen, strömungsrichtungsneutralen Frontblende auf. Hinter der Frontblende sind horizontal ausgerichtete, strömungsrichtungsbestimmende Richtlamellen angeordnet, die relativ zum Frontblendengehäuse und zur Frontblende schwenkbar im Frontblendengehäuse gelagert sind. Die Richtlamellen werden durch eine relativ kurze Einstell-Schwenkbewegung mit anschließender Rückstellung der Frontblende in der einen oder anderen Schwenkrichtung in eine entsprechende Verweilstellung mitgenommen.

Der vorliegenden Erfindung liegt die Aufgabe zugrunde, einen Luftstromverteiler nach dem Oberbegriff des Anspruchs 1 zu schaffen, bei dem der Ausströmwinkel des Luftstromes rasch und in starkem Maße veränderbar ist.

Diese Aufgabe wird bei einem Luftstromverteiler nach dem Oberbegriff des Anspruchs 1 durch dessen kennzeichnende Merkmale gelöst.

Im wesentlichen parallel und im Abstand zueinander an einem verstellbaren Dreheinsatz in einem Luftströmungskanal angeordnete und als Lamellen ausgeführte Luftleitelemente sind mit dem verstellbaren Dreheinsatz zwangsgekoppelt oder zwangskoppelbar, sodass sich mit der Verstellung des Dreheinsatzes auch eine Verstellbewegung der Lamellen gegenüber dem Dreheinsatz selbst ergibt. Hierzu sind die Lamellen luftstromaustrittseitig gelenkig an dem Dreheinsatz gehaltert und rückseitig an einem Verbindungsglied angelenkt. Dadurch liegt die (fiktive) Schwenkachse für jede Lamelle im mittleren Bereich zwischen ihren Anlenkpunkten, so daß deren Schwenkwinkel bei einer Bewegung des Einsatzes in eine der beiden Richtungen erheblich größer ist und der Luftstrom wesentlich stärker abgelenkt werden kann. Damit wird auch gleichzeitig der Stellweg des Dreheinsatzes für eine Lamellenverstellung erheblich verringert. Insgesamt wird die Variationsbreite der Belüftung erweitert.

Dabei ist der Dreheinsatz, an dessen Peripherie die Lamellen luftaustrittsseitig gelenkig angeordnet sind, an der Wandung des Luftströmungskanals drehbar gelagert, und das Verbindungsglied steht mit einem Koppelglied in Eingriff, das - wie der Dreheinsatz - an der Wandung des Luftströmungskanals drehbar gelagert ist, wobei die beiden Drehachsen im Abstand und parallel zueinander-angeordnet-sind. Gemäß einer ersten Ausführungsform kämmt das Koppelglied mit einem Zahnkranz mit einem am Dreheinsatz ausgebildeten Zahnkranz derart, dass ein Zahnradtrieb gebildet ist.

Gemäß einer zweiten Ausführungsform ist es auch möglich, daß zwischen dem am Dreheinsatz ausgebildeten Zahnkranz und dem Zahnkranz des Koppelgliedes ein weiteres Zahnrad angeordnet ist, das ebenfalls am Luftströmungskanal drehbar gelagert ist. Der am Dreheinsatz ausgebildete Zahnkranz kann bei dieser Variante an der Peripherie des Dreheinsatzes ausgebildet sein, und das Koppelglied kann drehbar konzentrisch zur Achse des Dreheinsatzes gelagert sein.

Das Verbindungsglied ist zweckmäßigerweise in seiner Form an die Krümmung der Peripherie des Dreheinsatzes angepaßt, so daß die Lamellen die gleiche Tiefe in Richtung der Längsachse des Luftströmungskanals haben können und parallel zueinander ausgerichtet sind, also untereinander gleich sind, was die Typenvielfalt der Einzelteile vorteilhaft einschränkt.

Das Verbindungsglied und das Koppelglied können auf einfache Weise miteinander durch eine an einem der beiden Bauteile ausgebildete Ausnehmung und einen in diese eingreifenden und am jeweils anderen Bauteil angeordneten Zapfen miteinander in Eingriff stehen.

Dabei ist es vorteilhaft, wenn die Ausnehmung am Koppelglied ausgebildet und als Langloch gestaltet und der Zapfen am Verbindungsglied angeordnet sind, weil das Langloch die erforderliche Bewegungsfreiheit für den Zapfen und zugleich eine sichere Führung bietet. Durch die Veränderung der Winkelstellung der Lamellen ändert sich auch der Abstand des Verbindungsgliedes zu dem Koppelglied, so daß sich auch der Zapfen relativ zum Koppelglied bewegt. Diese Bewegung wird durch das Langloch kompensiert. Deshalb würde auch eine Anordnung der Ausnehmung im Verbindungsglied mit einer entsprechend großräumigen Gestaltung desselben einhergehen müssen, was mit einem erhöhten Materialeinsatz verbunden wäre. Das Langloch kann dabei so ausgebildet sein, daß es die Bewegung des Zapfens vorbestimmt begrenzt, wodurch der Schwenkbereich des Dreheinsatzes ebenfalls vorbestimmt begrenzt ist.

In der Wandung des Luftströmungskanals kann aber auch eine Führungskurve für den Zapfen eingebracht sein, die dessen Bewegungsbereich absteckt und damit den Schwenkbereich des Dreheinsatzes begrenzt. Die Führungskurve ist gekrümmt, wobei deren Krümmungsmittelpunkt auf der dem Krümmungsmittelpunkt des Verbindungsgliedes abgewandten Seite desselben liegt.

Der Dreheinsatz kann käfigartig gestaltet sein und zwei im Abstand senkrecht zu seiner Drehachse angeordnete kreisrunde Wandungen aufweisen, zwischen denen der Lamellenblock und das Verbindungsglied angeordnet sind. Das Koppelglied und der am Dreheinsatz ausgebildete Zahnkranz können zwischen dem Dreheinsatz und der Wandung des Luftströmungskanals angeordnet sein. Die das Koppelglied und das Verbindungsglied trennende Wandung weist eine Ausnehmung für den an dem Verbindungsglied angeordneten Zapfen auf. Alternativ dazu ist es auch möglich, das Verbindungsglied und das Koppelglied zwischen den Dreheinsatz und der Wandung des Luftströmungskanals, also außerhalb des Dreheinsatzes anzuordnen. Ebenso ist es möglich, beide Glieder im Dreheinsatz anzuordnen. Dazu müssen dann in der Wandung des Dreheinsatzes jeweils eine einen Lagerzapfen oder eine Lagerwelle aufnehmende Ausnehmungen angeordnet sein.

Der Dreheinsatz kann mit einer an dessen Lagerwelle oder Lagerzapfen angreifenden Bedienungshandhabe, beispielsweise einem Stellrad gekoppelt sein.

Die Erfindung wird nachstehend an zwei Ausführungsbeispielen erläutert. In der zugehörigen Zeichnung zeigen schematisch:
- Fig.1:: einen erfindungsgemäßen Luftstromverteiler in einer Seitenansicht,
- Fig.2:: den Luftstromverteiler mit veränderter Luftausströmrichtung,
- Fig.3:: eine Draufsicht auf einen Horizontalschnitt III-III,
- Fig.4: eine andere Ausführungsform eines erfindungsgemäßen Luftstromverteilers in einer Seitenansicht,
- Fig.5:: diesen Luftstromverteiler mit veränderter Luftausströmrichtung und
- Fig.6:: einen Ausschnitt aus einem Horizontalschnitt VI-VI.

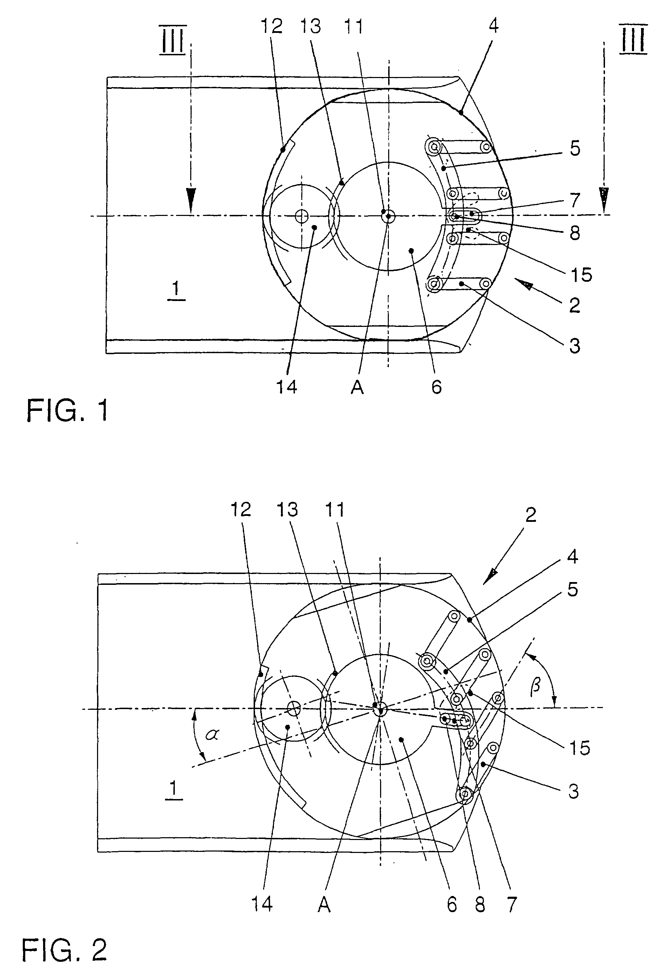

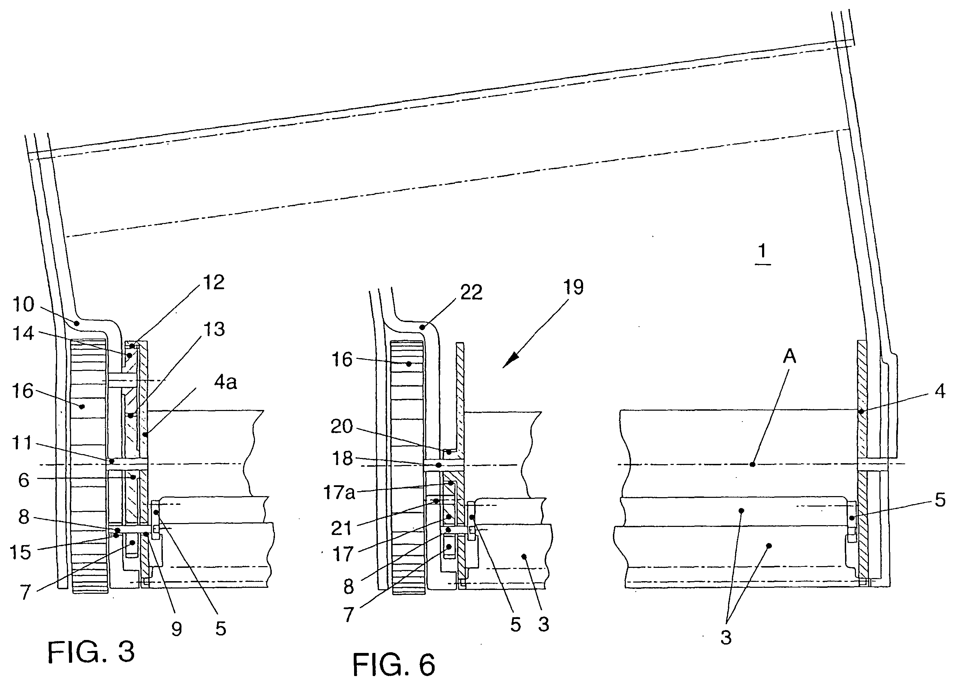

Fig. 1 zeigt einen Luftströmungskanal 1 mit einem an der Luftaustrittseite angeordneten Lamellenblock 2 mit parallel und im gleichen Abstand zueinander angeordneten Lamellen 3, die an den Wandungen 4a eines am Luftausströmungskanal 1 gelagerten Dreheinsatzes 4 an deren Peripherie luftaustrittseitig gelenkig gehaltert sind. Die Wandungen 4a sind kreisrund und senkrecht zur Drehachse A des Dreheinsatzes angeordnet, was insbesondere in Fig. 3 zu sehen ist. Rückseitig sind die Lamellen beidseitig an einem gemeinsamen Verbindungsglied 5 angelenkt, das über ein Koppelglied 6 mit dem Dreheinsatz 4 in Eingriff steht. Dazu weist dieses Koppelglied 6 eine Langloch-Ausnehmung 7 und das Verbindungsglied 5 einen in diese eingreifenden Zapfen 8 auf, wobei dieser durch eine Ausnehmung 9 in der Wandung 4a geführt ist. Die Ausnehmung 9 (Fig. 3) ist dabei so groß, daß eine Relativbewegung des Zapfens 8 zum Dreheinsatz 4 nicht behindert wird. Das Koppelglied 6 ist außerhalb des Dreheinsatzes 4 an einer vertikalen Wandung 10 des Luftströmungskanals 1 drehbar gelagert und zwar koaxial zum Dreheinsatz 4 auf dessen Lagerzapfen 11.

Die dem Koppelglied 6 zugewandte Wandung 4a des Dreheinsatzes 4 ist mit einem Zahnkranzabschnitt 12 versehen, der in einem dem Lamellenblock 2 gegenüberliegenden Abschnitt an der Peripherie an der dem Koppelglied 6 zugewandten Seite dieser Wandung 4a ausgebildet ist. Zwischen dem Koppelglied 6, das auf der dem Lamellenblock abgewandten Seite einen Zahnkranzabschnitt 13 aufweist, und dem Zahnkranzabschnitt 12 ist ein an der Wandung 10 drehbar gelagertes Zahnrad 14 angeordnet, das mit beiden Zahnkranzabschnitten 12 und 13 im Eingriff steht.

Fig. 3 zeigt, daß der Zapfen 8 durch die Ausnehmung 9 des Dreheinsatzes 4 bis in einen in der Wandung 10 ausgebildeten Führungsschlitz 15 geführt ist. Dieser ist der Bewegungskurve des Zapfens 8 angepaßt (angedeutet in den Fig. 1 und 2) und begrenzt dessen Bewegung und damit den Schwenkbereich des Dreheinsatzes 4.

Auf der dem Dreheinsatz 4 abgewandten Seite der Wandung 10 ist ein Stellrad 16 als Bedienungshandhabe angeordnet, das mit dem Lagerzapfen 11 drehfest verbunden ist.

Wird nun dieses Stellrad 16 beispielsweise um einen Winkel α gegen den Uhrzeigersinn gedreht, bewegt sich der Dreheinsatz 4 ebenfalls um den Winkel α gegen den Uhrzeigersinn. Durch den Eingriff des Zahnkranzabschnittes 12 mit dem Zahnrad 14 wird dieses auch gegen den Uhrzeigersinn gedreht und bewegt auf der dem Zahnkranzabschnitt 12 abgewandten Seite das Koppelglied 6 unter Mitnahme des Verbindungsgliedes 5 im Uhrzeigersinn. Damit vollführt das Verbindungsglied 5 eine zum Dreheinsatz 4 gegenläufige Bewegung, die die durch die Drehung des Dreheinsatzes 4 um den Winkel α verursachte Schwenkbewegung der Lamellen 3 erheblich vergrößert (Schwenkwinkel β). Fig. 2 zeigt den Schwenkwinkel β als Ergebnis einer relativ geringfügigen Drehbewegung des Stellrades 16 um den Winkel α.

Die Verstellbewegung der Lamellen 3 ist über das Übersetzungsverhältnis des Zahnradtriebes und die Dimensionierung der zusammenwirkenden Glieder vorbestimmbar.

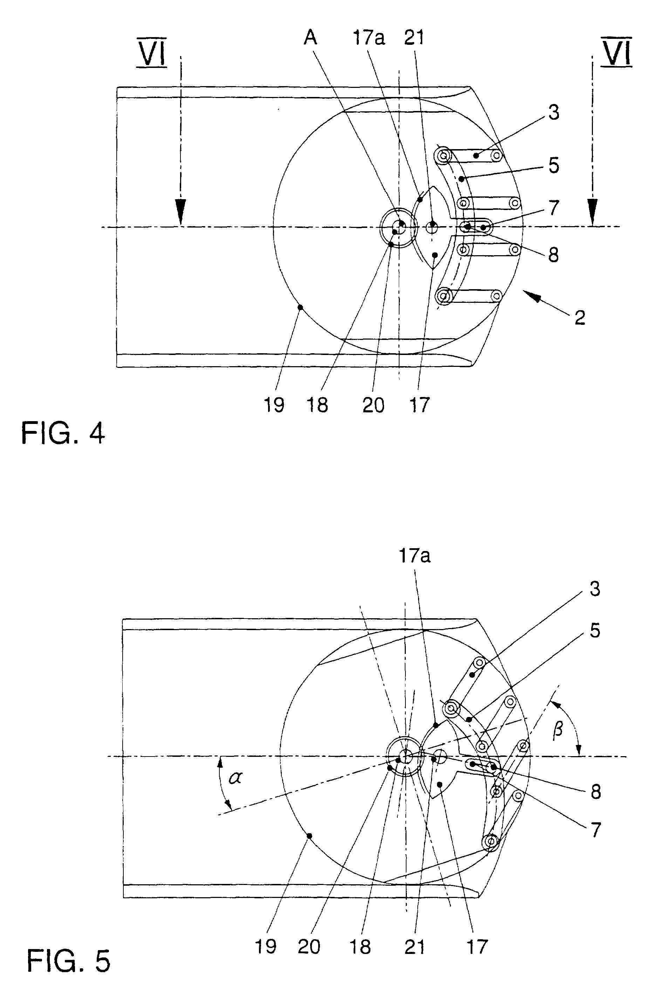

Die Fig. 4,5 und 6 zeigen eine weitere Ausführungsform eines erfindungsgemäßen Luftstromverteilers. Bei diesem ist ein mit dem Verbindungsglied 5 in Eingriff stehendes Koppelglied 17 zwischen diesem (5) und einem am Lagerzapfen 18 des Dreheinsatzes 19 ausgebildeten Zahnkranz 20 angeordnet, mit dem es mit einem Zahnkranzabschnitt 17a in Eingriff steht, und drehbar mit einem Lagerzapfen 21 an der Wandung 22 des Luftausströmkanals 1 gehaltert. Die Ausführung und Anordnung der Lamellen 3 und die Anordnung des Stellrades 16 entsprechen der ersten Ausführungsform.

Bei einer Drehung des Stellrades 16 gegen den Uhrzeigersinn wird der Zahnkranz 20 ebenfalls entgegen den Uhrzeigersinn gedreht. Dadurch wird das Koppelglied 17 im Uhrzeigersinn verschwenkt und bewegt das Verbindungsglied 5 entgegen der Bewegungsrichtung des Dreheinsatzes 19. Auch bei dieser Ausführung durchlaufen die Lamellen 3 einen großen Schwenkwinkel β schon bei einer wesentlich kleineren Drehbewegung (Winkel α) des Stellrades 16.

### BEZUGSZEICHENLISTE

- 1: Luftströmungskanal
- 2: Lamellenblock
- 3: Lamellen
- 4: Dreheinsatz
- 5: Verbindungsglied
- 6: Koppelglied
- 7: Langloch-Ausnehmung
- 8: Zapfen
- 9: Ausnehmung
- 10: Wandung
- 11: Lagerzapfen
- 12: Zahnkranzabschnitt
- 13: Zahnkranzabschnitt
- 14: Zahnrad
- 15: Führungsschlitz
- 16: Stellrad
- 17: Koppelglied
- 18: Lagerzapfen
- 19: Dreheinsatz
- 20: Zahnkranz
- 21: Lagerzapfen
- 22: Wandung

## Patentansprüche

1. Luftstromverteiler, insbesondere für einen Kraftfahrzeuginnenraum, mit einem an der Luftaustrittsseite eines Luftströmungskanals (1) angeordneten Lamellenblock (2) mit im wesentlichen parallel und im Abstand zueinander angeordneten Lamellen (3), die an einem gegenüber dem Luftströmungskanal (1) verstellbaren Einsatz (4; 19) gehaltert sind, durch dessen Verstellbewegung der Anstellwinkel der Lamellen (3) gegenüber der Achse des Luftströmungskanals (1) zur Veränderung des Ausströmwinkels des Luftstromes veränderbar ist, wobei wenigstens eine der Lamellen (3) mit dem Einsatz (4; 19) in der Weise zwangsgekoppelt oder zwangskoppelbar ist, dass aus einer dem Einsatz (4; 19) auferlegten Verstellbewegung eine Bewegung der wenigstens einen Lamelle auch gegenüber dem Einsatz (4; 19) abgeleitet bzw. ableitbar ist, und wobei die Lamellen (3) luftaustrittseitig gelenkig am Einsatz (4; 19) gehaltert und rückseitig an wenigstens einem gemeinsamen Verbindungsglied (5) angelenkt sind,
**dadurch gekennzeichnet, dass**
der Einsatz ein am Luftströmungskanal (1) drehbar gelagerter Dreheinsatz (4; 19) ist, an dessen Peripherie die Lamellen (3) luftaustrittseitig angeordnet sind, wobei das Verbindungsglied (5) mit einem Koppelglied (6; 17) in Eingriff steht, das am Luftströmungskanal (1) drehbar gelagert und dessen Drehachse parallel zur Drehachse (A) des Dreheinsatzes (4; 19) angeordnet ist, und wobei entweder der Dreheinsatz (19) mit einem im Abstand zu seiner Drehachse (A) ausgebildeten Zahnkranz (20) in einen am Koppelglied (17) ausgebildeten Zahnkranz (17a), einen Zahnradtrieb bildend, eingreift, oder zwischen einem am Dreheinsatz (4) ausgebildeten Zahnkranzabschnitt (12) und einem Zahnkranzabschnitt (13) des Koppelgliedes (6) ein weiteres, am Luftströmungskanal (1) drehbar gelagertes Zahnrad (14), einen Zahnradtrieb bildend, angeordnet ist.

2. Luftstromverteiler nach Anspruch 1,
**dadurch gekennzeichnet, dass** das Verbindungsglied (5) mit dem Dreheinsatz (4; 19) derart gekoppelt ist, dass es bei einer Verstellbewegung desselben eine gegenläufige Bewegung ausführt.

3. Luftstromverteiler nach Anspruch 1 oder 2,
**dadurch gekennzeichnet, dass** das Verbindungsglied (5) in seiner Form an die Krümmung der Peripherie des Dreheinsatzes (4; 19) angepasst ist.

4. Luftstromverteiler nach Anspruch 1 oder 2,
**dadurch gekennzeichnet, dass** das Verbindungsglied (5) und das Koppelglied (6; 17) über eine an einem der beiden Glieder (6; 17) ausgebildeten Ausnehmung (7) und einem am jeweils anderen Glied (5) angeordneten Zapfen (8) miteinander im Eingriff stehen.

5. Luftstromverteiler nach Anspruch 4,
**dadurch gekennzeichnet, dass** die Ausnehmung (7) am Koppelglied (6; 17) und als zu dessen Drehachse gerichtetes Langloch ausgebildet und der Zapfen (8) am Verbindungsglied (5) angeordnet sind.

6. Luftstromverteiler nach Anspruch 5,
**dadurch gekennzeichnet, dass** der Dreheinsatz (4; 19) zwei im Abstand senkrecht zu seiner Drehachse (A) angeordnete kreisrunde Wandungen (4a) aufweist, zwischen denen der Lamellenblock (2) und das Verbindungsglied (5) angeordnet sind, wobei in wenigstens einer der Wandungen (4a) jeweils eine Ausnehmung (9) für den Zapfen (8) vorgesehen ist.

7. Luftstromverteiler nach Anspruch 6,
**dadurch gekennzeichnet, dass** der Zapfen (8) in eine am Luftströmungskanal (1) angeordneten Führungskurve (15) eingreift.

8. Luftstromverteiler nach einem der vorhergehenden Ansprüche,
**dadurch gekennzeichnet, dass** der Dreheinsatz (4; 19) mit einer an dessen Lagerzapfen (11; 18) oder Lagerwelle angeordneten Bedienungshandhabe (16) betätigbar ist.

## Claims

1. Air stream distributor, in particular for the interior of a motor vehicle, having a laminated block (2) which is arranged at the air outlet side of an air flow duct (1) and has laminations (3) which are essentially in parallel and at a distance from one another and are secured to an insert (4; 19) which is adjustable with respect to the air flow duct (1) and through whose adjustment movement the attitude angle of the laminations (3) with respect to the axis of the air flow duct (1) can be varied in order to change the outflow angle of the air stream, at least one of the laminations (3) being positively coupled or being capable of being positively coupled to the insert (4; 19) in such a way that a movement of the at least one lamination, even with respect to the insert (4; 19), is derived or can be derived from an adjustment movement which is superimposed on the insert (4; 19), and the laminations (3) being secured at the air outlet end in an articulated fashion to the insert (4; 19) and being coupled at the rear to at least one common connecting element (5),
**characterized in that**
the insert is a rotary insert (4; 19) which is rotatably mounted on the air flow duct (1) and at whose periphery the laminations (3) are arranged at the air outlet end, the connecting element (5) engaging with a coupling element (6; 17) which is rotatably mounted on the air flow duct (1) and whose axis of rotation is arranged parallel to the axis (A) of rotation of the rotary insert (4; 19), and either the rotary insert (19) engaging, with a toothed ring (20) formed at a distance from its axis (A) of rotation, in a toothed ring (17a) which is formed on the coupling element (17), said engagement forming a gearwheel drive, or a further gearwheel (14), which is rotatably mounted on the air flow duct (1), being arranged between a toothed ring section (12) formed on the rotary insert (4) and a toothed ring section (13) of the coupling element (6), said arrangement forming a gearwheel drive.

2. Air stream distributor according to Claim 1,
**characterized in that** the connecting element (5) is coupled to the rotary insert (4; 19) in such a way that when there is an adjustment movement of said connecting element (5) it carries out a movement in the opposite direction.

3. Air stream distributor according to Claim 1 or 2,
**characterized in that** the connecting element (5) is adapted in its shape to the curvature of the periphery of the rotary insert (4; 19).

4. Air stream distributor according to Claim 1 or 2,
**characterized in that** the connecting element (5) and the coupling element (6; 17) engage with one another via a recess (7) which is formed on one of the two elements (6; 17) and a pin (8) which is arranged on the respective other element (5).

5. Air stream distributor according to Claim 4,
**characterized in that** the recess (7) is formed on the coupling element (6; 17) and has an oblong hole which is directed towards the axis of rotation of the latter, and the pin (8) is arranged on the connecting element (5).

6. Air stream distributor according to Claim 5,
**characterized in that** the rotary insert (4; 19) has two circular walls (4a) which are arranged perpendicular to its axis (A) of rotation and between which the laminated block (2) and the connecting element (5) are arranged, in each case a recess (9) for the pin (8) being provided in at least one of the walls (4a).

7. Air stream distributor according to Claim 6,
**characterized in that** the pin (8) engages in a guide cam (15) which is arranged on the air flow duct (1).

8. Air stream distributor according to one of the preceding claims,
**characterized in that** the rotary insert (4; 19) can be actuated with an operator control handle (16) which is arranged on its bearing pin (11; 18) or bearing shaft.

## Revendications

1. Distributeur d'un courant d'air, en particulier pour l'intérieur d'un véhicule automobile, avec un bloc de lamelles (2) disposé sur le côté de sortie d'air d'un canal de courant d'air (1), avec des lamelles (3) disposées de manière sensiblement parallèle et écartées les unes des autres, qui sont montées sur un insert (4; 19) réglable par rapport au canal de courant d'air (1), insert dont le mouvement de changement de position permet de modifier l'angle d'incidence des lamelles (3) par rapport à l'axe du canal de courant d'air (1) afin de modifier l'angle de sortie du courant d'air, au moins une des lamelles (3) étant reliée positivement ou pouvant être reliée positivement à l'insert (4; 19) de façon qu'un mouvement de changement de position imposé à l'insert (4; 19) entraîne ou puisse entraîner un mouvement d'au moins cette lamelle également par rapport à l'insert (4; 19), et les lamelles (3) étant montées de manière articulée sur l'insert (4; 19) du côté de la sortie d'air et reliées par l'arrière de manière articulée à au moins un élément de liaison (5) commun,
**caractérisé en ce que**
l'insert est un insert basculant (4; 19) monté tournant dans le canal de courant d'air (1), sur la périphérie duquel sont disposées les lamelles (3) du côté de la sortie d'air, l'élément de liaison (5) étant en prise avec un élément d'accouplement (6; 17) monté tournant dans le canal de courant d'air (1) et dont l'axe de rotation est disposé parallèlement à l'axe de rotation (A) de l'insert basculant (4; 19), et où soit l'insert basculant (19) s'engrène avec une couronne dentée (20) disposée à distance de son axe de rotation (A), dans une couronne dentée (17a) aménagée sur l'élément d'accouplement (17) en formant un entraînement par engrenage, soit une autre roue dentée (14), montée tournante dans le canal de courant d'air (1), est disposée entre un secteur de couronne dentée (12) aménagé dans l'insert basculant (4) et un secteur de couronne dentée (13) de l'élément d'accouplement (6) en formant un entraînement par engrenage.

2. Distributeur d'un courant d'air selon la revendication 1,
**caractérisé en ce que** l'élément de liaison (5) est accouplé avec l'insert basculant (4; 19) de telle manière que, lors d'un mouvement de changement de position de celui-ci, il effectue un mouvement en sens opposé.

3. Distributeur d'un courant d'air selon la revendication 1 ou 2,
**caractérisé en ce que** la forme de l'élément de liaison (5) est adaptée à la courbure de la périphérie de l'insert basculant (4; 19).

4. Distributeur d'un courant d'air selon la revendication 1 ou 2,
**caractérisé en ce que** l'élément de liaison (5) et l'élément d'accouplement (6; 17) sont mutuellement en prise par l'intermédiaire d'un évidement (7) aménagé dans l'un des deux éléments (6; 17) et d'un tourillon (8) aménagé sur l'autre élément (5) respectif.

5. Distributeur d'un courant d'air selon la revendication 4,
**caractérisé en ce que** l'évidement (7) est disposé sur l'élément d'accouplement (6; 17) et constitué comme un trou longitudinal orienté vers l'axe de rotation de celui-ci et le tourillon (8) est disposé sur l'élément de liaison (5).

6. Distributeur d'un courant d'air selon la revendication 5,
**caractérisé en ce que** l'insert basculant (4; 19) possède deux parois circulaires (4a) disposées espacées et perpendiculaires à son axe de rotation (A), entre lesquelles sont disposés le bloc de lamelles (2) et l'élément de liaison (5), un évidement (9) pour le tourillon (8) étant prévu dans au moins l'une des parois (4a).

7. Distributeur d'un courant d'air selon la revendication 6,
**caractérisé en ce que** le tourillon (8) est en prise dans une courbe de guidage (15) disposée dans le canal de courant d'air (1).

8. Distributeur d'un courant d'air selon l'une des revendications précédentes,
**caractérisé en ce que** l'insert basculant (4; 19) peut être manoeuvré à l'aide d'une manette de manoeuvre (16) disposée sur les tourillons de basculement (11; 18) ou sur l'axe de basculement de celui-ci.
